(19) Europäisches Patentamt
European Patent Office
Office européen des brevets

(11) **EP 3 818 289 B1**

(12) **EUROPÄISCHE PATENTSCHRIFT**

(45) Veröffentlichungstag und Bekanntmachung des Hinweises auf die Patenterteilung:
**02.08.2023   Patentblatt 2023/31**

(21) Anmeldenummer: **19727981.3**

(22) Anmeldetag: **24.05.2019**

(51) Internationale Patentklassifikation (IPC):
**F16K 37/00** *(2006.01)*   **F16K 31/126** *(2006.01)*
**F16K 1/12** *(2006.01)*

(52) Gemeinsame Patentklassifikation (CPC):
**F16K 1/12; F16K 31/126; F16K 37/0041; F16K 37/0083**

(86) Internationale Anmeldenummer:
**PCT/EP2019/063539**

(87) Internationale Veröffentlichungsnummer:
**WO 2020/007531 (09.01.2020 Gazette 2020/02)**

(54) **SYSTEM ZUM AUSGLEICHEN EINER DURCH THERMISCHE BELASTUNG EINHERGEHENDE ABMESSUNGSÄNDERUNG AN EINER STELLARMATUR, STELLUNGSREGELUNGSSYSTEM, VERFAHREN ZUM AUSGLEICHEN EINER DURCH THERMISCHE BELASTUNG EINHERGEHENDE ABMESSUNGSÄNDERUNG AN EINER STELLARMATUR UND STELLARMATUR**

SYSTEM FOR COMPENSATING FOR A DIMENSIONAL CHANGE OF A CONTROL FITTING, WHICH DIMENSIONAL CHANGE ACCOMPANIES THERMAL LOADING, POSITION REGULATING SYSTEM, METHOD FOR COMPENSATING FOR A DIMENSIONAL CHANGE OF A CONTROL FITTING, WHICH DIMENSIONAL CHANGE ACCOMPANIES THERMAL LOADING, AND CONTROL FITTING

SYSTÈME DE COMPENSATION D'UNE MODIFICATION DE DIMENSION PROVOQUÉE PAR UNE CONTRAINTE THERMIQUE SUR UNE VANNE DE RÉGLAGE, SYSTÈME DE RÉGULATION DE POSITION, PROCÉDÉ DE COMPENSATION D'UNE MODIFICATION DE DIMENSION PROVOQUÉE PAR UNE CONTRAINTE THERMIQUE SUR UNE VANNE DE RÉGLAGE, ET VANNE DE RÉGLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2018   DE 102018116485**

(43) Veröffentlichungstag der Anmeldung:
**12.05.2021   Patentblatt 2021/19**

(73) Patentinhaber: **Samson Aktiengesellschaft
60314 Frankfurt am Main (DE)**

(72) Erfinder: **WAGNER-STÜRZ, David
64367 Mühltal (DE)**

(74) Vertreter: **Schmid, Nils T.F.
SKM-IP PartGmbB
Oberanger 45
80331 München (DE)**

(56) Entgegenhaltungen:
**EP-A2- 2 466 413        WO-A1-2011/026666
DE-A1-102015 118 198     GB-A- 2 452 043
US-A1- 2014 034 145**

**Beschreibung**

Die vorliegende Erfindung betrifft ein System zum Ausgleichen einer durch thermische Belastung einhergehende Abmessungsänderung an einer Stellarmatur zum Einstellen einer Prozessfluidströmung einer prozesstechnischen Anlage, wie einer chemischen Anlage, einer Lebensmittel verarbeitenden Anlage, eines Kraftwerks oder dergleichen, wobei die Stellarmatur ein Stellventil und einen das Stellventil aufweist. Die vorliegende Erfindung stellt auch ein Stellungsregelungssystem zum Regeln einer Stellarmatur bereit. Des Weiteren betrifft die vorliegende Erfindung ein Verfahren für ein derartiges System zum Ausgleichen einer durch thermische Belastung einhergehende Abmessungsänderung an einer Stellarmatur zum Einstellen einer Prozessfluidströmung einer prozesstechnischen Anlage, wie einer chemischen Anlage, einer Lebensmittel verarbeitenden Anlage, eines Kraftwerks oder dergleichen. Ferner ist eine Stellarmatur zum Einstellen einer Prozessfluidströmung einer prozesstechnischen Anlage, wie einer chemischen Anlage, einer Lebensmittel verarbeitenden Anlage, eines Kraftwerks oder dergleichen, bereitgestellt.

Eine Stellarmatur, wie ein Notschließventil oder ein Regelungsventil, dient dazu, eine Mediumströmung, insbesondere eine Fluidströmung, einer prozesstechnischen Anlage zu steuern und/oder einzustellen. Die Stellarmatur kann mit Hilfsenergie, wie pneumatischer Hilfsenergie, betrieben werden, wobei insbesondere ein vorzugsweise pneumatischer Stellantrieb über einen insbesondere elektropneumatischen Stellungsregler betätigt werden kann. Die Stellarmatur kann alternativ oder zusätzlich eine Pumpe umfassen.

Stellarmaturen, welche eine Prozessmediumströmung einer prozesstechnischen Anlage beeinflussen, insbesondere steuern und/oder regeln, können aufgrund deren Wärmeausdehnungskoeffizienten, insbesondere aufgrund der Wärmeausdehnungskoeffizienten der Komponenten der Stellarmaturen, Längenänderungen erfahren. Dieser Effekt verstärkt sich zunehmend beim Einsatz von Stellarmaturen in extremen Bedingungen, beispielsweise bei sehr niedrigen Temperaturen, wie in Kryo-Anwendungen, oder bei Hochtemperaturanwendungen. Eine zusätzliche Herausforderung entsteht insbesondere bei Stellarmaturen mit langen Stellstangen, die insbesondere bei Kryo- oder Hochtemperaturanwendungen eingesetzt werden, um stellantriebsnahe Stellarmaturkomponenten von der kalten bzw. heißen Prozessfluidtemperatur zu isolieren, was unter Umständen dazu führt, dass stellantriebsnahe Stellarmaturkomponenten ausgesetzt sind. Dies führt zu unterschiedlichen Einflüssen auf die Wärmeausdehnung bzw. Längenänderung der jeweiligen Stellarmaturenkomponenten. In prozesstechnischen Anlagen kommen vielmals Wärme- und/oder Kältequellen bzw. Isoliermaterialien zum Einsatz, die zusätzlich Einfluss auf die in der prozesstechnischen Anlage herrschenden Temperaturen nehmen. Die mit dem Stellantrieb und dem Stellglied verbundene Stellstange der Stellarmatur kann demnach Wärme oder Kälte entlang der Stellstange zwischen Stellantrieb und Stellglied übertragen. Eine weitere Einflussgröße stellt die Außentemperatur dar, die je nach Einsatzort bzw. Anwendungsgebiet vorherrscht und die prozesstechnische Anlage bzw. die Stellarmatur umgibt.

Die soeben beschriebenen thermischen Einflussgrößen bewirken Dehnungen oder Stauchungen der Stellarmaturkomponenten. Dadurch wird das Stellen der Stellarmaturen negativ beeinflusst, wobei Stell- und/oder Regelfehler, d. h. Verschiebungen der Stellarmaturen weg von der einzustellenden, gewünschten Stellarmaturstellung, von über 10 % auftreten können. Zum einen führen derartige Stell- und/oder Regelfehler zu einer Verschiebung des Arbeitsbereichs der Stellarmaturen, d. h. insbesondere dazu, dass über den eingestellten Stellhub nicht mehr die gewünschte Stellarmaturstellung erreicht wird. Zum anderen führen derartige Stell- und/oder Regelfehler zu einer Verschlechterung der Stell- und/oder Regelgüte, wobei es auch dazu kommen kann, dass endstellungsnahe Stellarmaturpositionen, wie eine Schließstellung oder eine vollständig geöffnete Stellung, nicht mehr zuverlässig eingenommen werden können. Beispielsweise kann es vorkommen, dass die Stellarmatur frühzeitig die Schließstellung eingenommen hat, obwohl der angewendete Stellehub idealerweise noch nicht in die Schließstellung geführt hätte.

Es ist bekannt, dieser Problematik durch eine geeignete Materialauswahl bzw. die Kombination unterschiedlicher Materialien für die einzelnen Stellarmaturkomponenten zu begegnen. Gemäß WO 2016/126902 ist eine Lösung zur Temperaturkompensation bei einem Stellventil beschrieben, bei der das Stellventil mit einem zusätzlichen, thermischen Ausgleichselement versehen ist. Dieses Ausgleichselement ist derart an dem Stellventil angeordnet, dass die Wärmeausdehnungs- bzw. Längenänderungsdifferenz der Stellventilkomponenten, insbesondere entlang der Stellstange, reduziert wird.

Aus EP 2 466 413 A2 ist eine Ventilanordnung und ein Betriebsverfahren bekannt. GB 2 452 043 A offenbart ein Kühl-Thermostatventil. US 2014/0034145 A1 offenbart ein fortgeschrittenes Ventilsteuerungssystem mit integriertem Vereisungsschutz.

An den bekannten Ansätzen ist jedoch nachteilig, dass diese zum einen schwierig zu realisieren sind und zum anderen Materialien vielmals durch das zu regelnde Medium und/oder die vorherrschende Umgebungstemperatur vorgegeben sind. Die Möglichkeit der Einflussnahme auf auftretende Längenänderungen und daraus resultierende Stell- und/oder Regelfehler ist demnach stark begrenzt.

Es ist Aufgabe der vorliegenden Erfindung, die Nachteile aus dem Stand der Technik zu verbessern, insbesondere ein deutlich genaueres und leicht umzusetzendes System zum Ausgleichen einer durch thermische Belastung einhergehende Abmessungsänderung an einer Stellarmatur zum Einstellen einer Prozessfluidströmung insbesondere bei extremen Temperaturbedingungen bereitzustellen, bei dem auf einfache Weise eine deutlich verbesserte Stell- und/oder Regelgüte insbesondere bei extremen Temperaturbedingungen erzielt ist. Ferner ist es Aufgabe der Erfindung ein deutlich genaueres und leicht umzusetzendes Verfahren zum Ausgleichen einer durch thermische Belastung einhergehende Abmessungsänderung an einer Stellarmatur zum Einstellen einer Prozessfluidströmung bereitzustellen, bei dem auf einfache Weise eine deutlich verbesserte Stell- und/oder Regelgüte insbesondere bei extremen Temperaturbedingungen erzielt ist.

Diese Aufgabe wird durch die Merkmale der Ansprüche 1, 10, 12 und 14 gelöst.

Gemäß Anspruch 1 ist ein System zum Ausgleichen einer durch thermische Belastung einhergehende Abmessungsänderung an einer Stellarmatur zum Einstellen einer Prozessfluidströmung einer prozesstechnischen Anlage, wie einer chemischen Anlage, einer lebensmittelverarbeitenden Anlage, eines Kraftwerks oder dergleichen bereitgestellt. Unter thermischer Belastung können dabei beispielsweise jegliche auf die Stellarmatur einwirkenden Temperatureinflüsse angesehen werden. Thermische Einflussfaktoren können beispielsweise durch die Umgebung und/oder durch das einzustellende Prozessfluid hervorgerufen werden. Besonders kritisch sind Stellarmaturen in extremen Einsatzbedingungen, beispielsweise bei sehr niedrigen Temperaturen, wie in Kryo-Anwendungen oder bei Hochtemperaturanwendungen. Beispielsweise stellt auch die Umgebungstemperatur der Stellarmatur, je nach Einsatzort bzw. Anwendungsgebiet der Stellarmatur bzw. der prozesstechnischen Anlage, eine Einflussgröße dar. Als Umgebungstemperatur kann eine Temperatur zu verstehen sein, die größtenteils unbeeinflusst von der an der Stellarmatur, insbesondere am Stellventil, herrschenden Temperatur, insbesondere der Prozessfluidtemperatur, ist. Das System umfasst ferner einen das Stellventil antreibenden Stellantrieb. Vorzugsweise handelt es sich dabei um einen pneumatischen Stellantrieb, der beispielsweise über einen insbesondere elektropneumatischen Stellungsregler betätigt werden kann. Eine Stellungsregelung kann zum Ansteuern des Stellantriebs vorgesehen sein und dazu ausgelegt sein, anhand eines Temperaturunterschieds zwischen einer Prozesstemperatur, wie der Prozessfluidtemperatur und einer Umgebungstemperatur, wie einer Stellantriebstemperatur, eine Stellwegkorrektur für den Stellantrieb zu bestimmen. Bei der Stellwegkorrektur handelt es sich vorzugsweise um eine Korrektur einer temperatur- und/oder stellarmaturwerkstoffabhängigen Abmessungsänderung der Stellarmatur insbesondere während des Betriebs, bei der Initialisierung oder Kalibrierung der Stellarmatur. Insbesondere dient die Stellwegkorrektur dazu, eine Abweichung der Stellarmatur-Ist-Stellung von der mittels der Stellungsregelung einzustellenden Stellarmatur-Soll-Stellung zu korrigieren. Dadurch können Stell- und/oder Regelfehler vermieden werden und der Arbeitsbereich der Stellarmatur vollständig beibehalten werden. Eine Verschlechterung der Regelgüte wird somit ebenfalls vermieden, da aufgrund der Stellwegkorrektur weiterhin zuverlässig insbesondere auch die endstellungnahen Stellarmaturpositionen, wie eine Schließstellung und/oder eine vollständig geöffnete Stellung, zuverlässig eingenommen werden können.

Bei einer beispielhaften Ausführung des erfindungsgemäßen Systems korrigiert das System die Stellarmaturstellung anhand der Stellwegkorrektur. Die Stellwegkorrektur kann beispielsweise in Form eines Stellungsregelungsbefehls die Stellarmatur verfahren und somit die Stellarmaturstellung ändern bzw. korrigieren. Beispielsweise kann die Stellwegkorrektur als Stellungsregelungsbefehl einem Stellungsregler mit integriertem Stellungsregelungssystem der Stellarmatur zugeführt werden, sodass das Stellungsregelungssystem des Stellungsreglers die Stellwegkorrektur in den von ihm ausgegebenen Stellungsregelungsbefehl integriert, um diesen anhand der Stellwegkorrektur zu ändern bzw. zu korrigieren. Alternativ kann die Stellwegkorrektur über eine separate, von dem Stellungsregler bzw. dessen Stellungsregelungssystem unabhängige Schnittstelle auf die Stellarmaturstellung einwirken. Insbesondere ist dann das erfindungsgemäße System unabhängig von dem Stellungsregler bzw. dessen Stellungsregelungssystem. Bei einer beispielhaften Weiterbildung gleicht die Stellwegkorrektur eine Abmessungsänderung an der Stellarmatur vorzugsweise während des Betriebes der Stellarmatur derart aus, dass eine Abweichung einer Stellarmatur-Ist-Stellung von einer Stellarmatur-Soll-Stellung korrigiert ist. Beispielsweise kann die Abmessungsänderung aufgrund von Temperatureinflüssen bzw. thermischer Belastung dazu führen, dass die insbesondere durch den Stellungsregler einzustellende Stellarmatur-Soll-Stellung nicht vollständig eingenommen wird, d.h. eine Abweichung zwischen Ist-Stellung und Soll-Stellung vorliegt. Diese Abweichung kann anhand der Stellwegkorrektur ausgeglichen werden, die dazu führt, dass die Stellarmatur aus der insbesondere durch den Stellungsregler eingestellten Stellarmatur-Ist-Stellung verfahren wird, um der Stellarmatur-Soll-Stellung zumindest näher zu kommen, bzw. die Stellarmatur-Soll-Stellung einzunehmen. Dadurch kann die geforderte Stell- und/oder Regelgüte der Stellarmatur eingehalten bzw. verbessert werden.

Bei einer beispielhaften Ausführung des erfindungsgemäßen Systems ist die Bestimmung der Stellwegkorrektur mittels eines stellarmaturspezifischen Ausdehnungskoeffizienten, wie dem Temperatur-Ausdehnungskoeffizient, realisiert. Beispielsweise kann die Bestimmung der Stellwegkorrektur anhand des Ausdehnungskoeffizienten einer den Stellantrieb mit dem Stellventil verbindenden Kopplungsstruktur, wie einer Stellstange und/oder Laterne insbesondere nach NAMUR, des Stellantriebs und/oder des Stellventils erfolgen. Die Stellwegkorrektur kann demnach aus dem Temperaturunterschied zwischen Prozesstemperatur und Umgebungstemperatur und der Kenntnis eines, insbesondere werkstoffabhängigen, stellarmaturspezifischen Ausdehnungskoeffizienten auf einfache Weise bestimmt werden. Dieser Zusammenhang ermöglicht es, insbesondere auch bei ggf. auftretenden unterschiedlichen Wärmeausdehnungskoeffizienten der verschiedenen Stellarmaturkomponenten, insbesondere des Stellantriebs, des Stellventils und/oder der den Stellanrieb mit dem Stellventil verbindenden Kopplungsstruktur, beispielsweise Stellstange und/oder Laterne insbesondere nach NAMUR, auf einfache Weise die Stellwegkorrektur zu bestimmen, um somit die Regel- und/oder Steuergüte der Stellarmatur zu verbessern.

In einer weiteren beispielhaften Ausführung des erfindungsgemäßen Systems ist der Ausdehnungskoeffizient zumindest abschnittsweise zwischen dem Stellantrieb und dem Stellventil erfasst. Das System ist dazu in der Lage, aus dem Temperaturunterschied zwischen Prozesstemperatur und Umgebungstemperatur, insbesondere zwischen der Prozessfluidtemperatur und der Stellantriebstemperatur, und der Kenntnis des Ausdehnungskoeffizienten zumindest eines Stellarmaturabschnitts zwischen dem Stellantrieb und dem Stellventil auf die gesamte, das heißt entlang der vollständigen Stellarmatur-Längserstreckung, durch thermische Belastung an der Stellarmatur einhergehende Abmessungsänderung, die zu Abweichungen zwischen Soll- und Ist-Stellung der Stellarmatur führt, die notwendige Stellwegkorrektur zu bestimmen, um die Regelgüte einzuhalten und/oder zu verbessern. Beispielsweise kann in dem erfindungsgemäßen System ein Algorithmus zur Berechnung des Ausdehnungskoeffizienten gemäß der Formel

$$\alpha = \frac{\Delta L}{L \cdot \Delta T}$$

hinterlegt sein und das System kann nach diesem Algorithmus arbeiten, um die Stellwegkorrektur zu bestimmen, wobei $\alpha$ der Ausdehnungskoeffizient ist, L eine unter Normalbedingungen, d.h. ohne Temperatureinflüsse, vorliegende Länge der Stellarmatur und $\Delta T$ der Temperaturunterschied zwischen einer Prozesstemperatur T1, wie einer Prozessfluidtemperatur, und einer Umgebungstemperatur T2, wie einer Stellantriebstemperatur. Beispielsweise kann das System die zu erwartende bzw. auftretende Abmessungsänderung, insbesondere Längenänderung, der Stellarmatur aus oben genannter Formel, d.h. aus dem Temperaturunterschied und dem erfassten Ausdehnungskoeffizienten, bestimmen, anhand welcher die Stellwegkorrektur abgeleitet wird. Wird beispielsweise die Abmessungsänderung an einer Stellventilkomponente bestimmt und hatte die Abmessungsänderung in Folge der thermischen Belastung eine Längenvergrößerung der Stellarmatur zur Folge, wirkt sich die Stellwegkorrektur derart auf die durch den Stellantrieb an der Stellarmatur eingestellte Stellarmaturstellung aus, dass die Stellarmaturstellung um den Betrag der Stellwegkorrektur weniger verfahren wird.

Beispielsweise besitzt das System eine Speichereinheit mit einer Datenbank für stellarmaturspezifische Ausdehnungskoeffizienten. In der Datenbank können stellarmaturkomponenten- und/oder werkstoffabhängige Ausdehnungskoeffizienten hinterlegt sein, welche je nach Bedarf für die Bestimmung der Stellwegkorrektur herangezogen werden können. Beispielsweise kann das System alternativ oder zusätzlich auch eine Verarbeitungseinheit aufweisen, die dazu ausgelegt ist, bei einer Initialisierung oder Kalibrierung der Stellarmatur oder vor Inbetriebnahme der Stellarmatur experimentell, insbesondere bei einer Stellarmatur-Typprüfung und/oder einer thermischen Prüfung, beispielsweise in einem Temperaturschrank, den stellarmaturspezifischen Ausdehnungskoeffizienten zu bestimmten. Die Bestimmung des stellarmaturspezifischen Ausdehnungskoeffizienten mittels der Verarbeitungseinheit kann beispielsweise anhand der oben genannten Formel für den Wärmeausdehnungskoeffizienten erfolgen. Ferner ist es möglich, die mittels der Verarbeitungseinheit bestimmten oder mittels einer zusätzlichen Benutzerschnittstelle dem System mitgeteilten stellarmaturspezifischen Ausdehnungskoeffizienten beispielsweise der Datenbank zuzuführen und in der Datenbank zu speichern, um die Datenbank und somit die Erfahrungswerte für Ausdehnungskoeffizienten und Stellwegkorrekturen weiter auszubauen.

Bei einer beispielhaften Weiterbildung des erfindungsgemäßen Systems umfasst das System eine Sensoreinrichtung zum Erfassen der Prozesstemperatur, wie der Prozessfluidtemperatur, und/oder einer Umgebungstemperatur, wie der Stellantriebstemperatur. Die Sensoreinrichtung kann beispielsweise an der Stellarmatur angeordnet sein, insbesondere Teil der Stellarmatur sein, oder bei Bedarf mit der Stellarmatur gekoppelt werden, um die gewünschten Temperaturen zu erfassen. Bei einer Weiterbildung der Sensoreinrichtung weißt diese einen Proximalsensor zum Ermitteln der Prozesstemperatur insbesondere im Bereich des Stellventils und/oder einem Distalsensor zum Ermitteln einer Umgebungstemperatur beispielsweise in einem vorbestimmten Abstand zum Stellventil auf. Vorteilhafterweise ist der Abstand zwischen den Temperaturerfassungspunkten, bzw. den Anbringungspunkten von Proximal- und/oder Distalsensor an der Stellarmatur, derart gewählt, dass insbesondere mittels des Proximalsensors die Prozessfluidtemperatur erfasst bzw. gemessen werden kann und insbesondere mittels des Distalsensors eine vorzugsweise im Bereich des Stellantriebs herrschende Stellantriebstemperatur bzw. Stellantriebs-Umgebungstemperatur erfasst bzw. gemessen werden kann.

Bei einer beispielhaften Ausführung umfasst das erfindungsgemäße System eine Speichereinheit, auf der eine Datenbank mit Erfahrungswerten für Prozesstemperaturen, insbesondere Prozessfluidtemperaturen, und/oder Erfahrungswerten für Umgebungstemperaturen, vorzugsweise Stellantriebstemperaturen, hinterlegt ist. Es sei klar, dass die Umgebungstemperaturen, insbesondere die Stellantriebstemperaturen, von dem Einsatzort und/oder der Anwendung, beispielsweise einer Hochtemperaturanwendung oder einer Kryo-Anwendung, der Stellarmatur abhängen. Das System kann ferner eine Benutzerschnittstelle aufweisen, bzw. an eine Benutzerschnittstelle gekoppelt sein, mittels welcher Prozesstemperaturen und/oder Umgebungstemperaturen durch einen Nutzer eingegeben werden können. Bei einer Weiterbildung des erfindungsgemäßen Systems können auf der Speichereinheit sowohl die stellarmaturspezifischen Ausdehnungskoeffizienten als auch die Datenbank mit Prozesstemperaturen und/oder Umgebungstemperaturen hinterlegt sein.

Bei der Bestimmung der Stellwegkorrektur anhand des Temperaturunterschieds zwischen der Prozesstemperatur und der Umgebungstemperatur greift das System auf die Sensoreinrichtung und/oder die Datenbank mit Temperaturen zu, um den Temperaturunterschied zu bestimmen, vorzugsweise um anhand eines stellarmaturspezifischen Ausdehnungskoeffizienten die Stellwegkorrektur abzuleiten. Erfindungsgemäß reicht dem System die Kenntnis zweier Temperaturwerte, insbesondere der Prozesstemperatur, wie der Prozessfluidtemperatur und der Umgebungstemperatur, wie der Stellantriebstemperatur aus, um eine durch thermische Belastung einhergehende Abmessungsänderung an der Stellarmatur mittels einer zu bestimmenden Stellwegkorrektur auszugleichen. Die Temperaturwerte können dabei gemessen und/oder aus der Datenbank ausgewählt werden, wobei beispielsweise ein Temperaturwert gemessen und/oder aus der Datenbank ausgewählt ist, beide Temperaturwerte gemessen oder beide Temperaturwerte aus der Datenbank ausgewählt werden. Beispielsweise kann das System anhand der Prozess- und Umgebungstemperatur eine Temperaturkurve, wie einen Temperaturverlauf oder einen Temperaturgradient, für die gesamte Stellarmatur, d. h. entlang der vollständigen Längserstreckung der Stellarmatur, bilden, wobei beispielsweise das Bilden des vollständigen Temperaturverlaufs der Stellarmatur auf Erfahrungswerten basiert. Zur Bildung des vollständigen Temperaturverlaufs kann demnach auf bekannte Temperaturverläufe für die Stellarmatur in dem jeweiligen Temperaturumfeld, bei dem die beiden erfassten Temperaturwerte vorliegen, zurückgegriffen werden.

Bei einer Weiterbildung des erfindungsgemäßen Systems erfasst die Sensoreinrichtung die Prozesstemperatur und/oder die Umgebungstemperatur insbesondere kontinuierlich beim Einnehmen der Stellarmatur einer vorbestimmten Referenzstellung. Bei der Referenzstellung kann es sich beispielsweise um eine Schließ- und/oder vollständig geöffnete Stellarmaturstellung handeln. Das System kann demnach jedes Mal, wenn die Stellarmatur diese vorbestimmte Referenzstellung einnimmt, die Prozesstemperatur und/oder die Umgebungstemperatur mittels der Sensoreinrichtung erfassen, um die dem System zugrundeliegenden Temperaturwerte zu aktualisieren. Beispielsweise kann zum Erfassen des Einnehmens der Stellarmatur einer bestimmten Referenzstellung eine Erfassungseinrichtung, wie beispielsweise einen Sensoreinrichtung, vorgesehen sein, welche beispielsweise mittels eines Kontaktsensors ausgebildet ist, welcher den Kontakt zum Beispiel des Stellventilkegels mit dem Stellventilsitz in der Schließstellung der Stellarmatur wahrnimmt, das Erfassen der Prozesstemperatur und/oder der Umgebungstemperatur initiiert und gegebenenfalls einen entsprechenden Erfassungsvorgang ausgibt bzw. signalisiert. Die Erfassungseinrichtung kann ferner derart angesteuert werden, dass zu einem beliebigen Zeitpunkt bzw. zu einer beliebigen Stellarmaturstellung das Erfassen der Prozesstemperatur und/oder der Umgebungstemperatur initiiert werden kann.

Bei einer Weiterbildung des erfindungsgemäßen Systems gleicht das System anhand des/der in der Referenzstellung erfassten Temperaturwerts/Temperaturwerte die Stellwegkorrektur an. Vorzugsweise ist das System dazu ausgebildet, die Datenbank mit Stellwegkorrekturen zu aktualisieren, d.h. zum einen der Datenbank die angeglichene Stellwegkorrektur zuzuführen und zum anderen den dem Temperaturunterschied zugeordneten Stellwegkorrekturwert zu aktualisieren. Das dadurch gebildete erfindungsgemäße System kann somit als ein sogenanntes selbstlernendes System aufgefasst werden, mit welchem es insbesondere möglich ist, auf Fertigungs- und Materialtoleranzen bzw. -abweichungen, welche sich beispielsweise während des Betriebs ergeben, zu reagieren und gegebenenfalls Gegenmaßnahmen einzuleiten. Ein Vorteil des selbstlernenden Systems besteht insbesondere darin, dass sich das System insbesondere automatisch, wie selbstlernend, an Veränderungen anpasst.

Bei einer weiteren beispielhaften Ausführung des erfindungsgemäßen Systems vergleicht das System den für die bestimmte Stellwegkorrektur maßgebenden Temperaturunterschied mit dem aktualisierten, in der Referenzstellung erfassten Temperaturunterschied. Ferner gleicht das System die Stellwegkorrektur anhand der Abweichung der Temperaturunterschiede voneinander an. Vorzugsweise kann die Datenbank mit Stellwegkorrekturen aktualisiert werden. Das heißt, dass zum einen die neuen erfassten Daten der Datenbank zugeführt werden, um diese weiter auszubauen, und zum anderen, dass der einer Stellwegkorrektur zugeordnete Temperaturunterschied aktualisiert wird. Vorzugsweise vergleicht das System den Temperaturunterschied zwischen der mittels der Sensoreinrichtung erfassten Prozess- oder Umgebungstemperatur und der aus der Speichereinheit entnommenen Umgebungs- oder Prozesstemperatur. Alternativ vergleicht das System den Temperaturunterschied zwischen der mittels der Sensoreinrichtung erfassten Prozess- und Umgebungstemperatur. Beispielsweise kann vorgesehen sein, dass nicht jede Abweichung der Temperaturunterschiede voneinander zu einer Angleichung der Stellwegkorrektur führt. Dazu können vorbestimmte Grenzwerte für Abweichungen vorgesehen sein, sodass erst bei Überschreiten der vorbestimmten Grenzwerte eine Angleichung der Stellwegkorrektur durchgeführt wird. Somit kann gewährleistet werden, dass eine Flexibilität bzw. Reaktionsfähigkeit auf Änderungen des Stellarmaturbetriebs vorliegt, und vermieden werden, dass dies zu einer Art Übersensibilität, wie einer zu häufigen Änderung der Stellwegkorrektur, führt.

Gemäß einem weiteren Aspekt der vorliegenden Erfindung, der mit den vorhergehenden Aspekten kombinierbar ist, ist ein Stellungsregelungssystem zum Regeln einer Stellarmatur zum Einstellen einer Prozessfluidströmung einer prozesstechnischen Anlage, wie einer chemischen Anlage, einer lebensmittelverarbeitenden Anlage, eines Kraftwerks oder dergleichen bereitgestellt. Eine solche Stellarmatur umfasst ein Stellventil, einen das Stellventil insbesondere pneumatisch antreibenden Stellantrieb und eine Stellungsregelung zum Ansteuern des Stellantriebs. Beispielsweise gibt die Stellungsregelung Stellungsregelungsbefehle an den Stellantrieb ab, um das Stellventil von einer Stellarmaturstellung in eine andere Stellarmaturstellung zu verfahren. Erfindungsgemäß korrigiert das Stellungsregelungssystem anhand eines Temperaturunterschieds zwischen einer Prozesstemperatur, wie der Prozessfluidtemperatur, und einer Umgebungstemperatur, wie einer Stellantriebstemperatur, einen Stellweg. Und zwar kann das Stellungsregelungssystem mittels der Stellwegkorrektur einen Stellungsreglungsbefehl der Stellungsregelung an den Stellantrieb korrigieren. Vorteilhafterweise kann dadurch die Stell- und/oder Regelgüte der Stellarmatur verbessert werden.

Bei einer beispielhaften Ausführung des erfindungsgemäßen Stellungsregelungssystems umfasst das Stellungsregelungssystem ein erfindungsgemäßes System zum Ausgleichen einer durch thermische Belastung einhergehende Abmessungsänderung der Stellarmatur, wie es in Bezug auf die vorhergehenden Aspekte der vorliegenden Erfindung beschrieben wurde. Insbesondere kann das System zum Ausgleichen der Abmessungsänderung in das Stellungsregelungssystem integriert oder mit diesem gekoppelt sein.

Gemäß einem weiteren Aspekt der vorliegenden Erfindung, der mit den vorhergehenden Aspekten kombinierbar ist, ist ein Verfahren zum Ausgleichen einer durch thermische Belastung einhergehende Abmessungsänderung an einer Stellarmarmatur zum Einstellen einer Prozessfluidströmung einer prozesstechnischen Anlage, wie einer chemischen Anlage, einer lebensmittelverarbeitenden Anlage, eines Kraftwerks oder dergleichen bereitgestellt. Eine solche Stellarmatur umfasst ein Stellventil, einen das Stellventil insbesondere pneumatisch antreibenden Stellantrieb und eine Stellungsregelung zum Ansteuern des Stellantriebs. Bei dem erfindungsgemäßen Verfahren wird eine Stellwegkorrektur für den Stellanrieb anhand eines Temperaturunterschieds zwischen einer Prozesstemperatur, wie der Prozessfluidtemperatur, und einer Umgebungstemperatur, wie eine Stellantriebstemperatur, bestimmt. Durch das erfindungsgemäße Verfahren lässt sich auf einfach Weise eine deutlich verbesserte Stell- und/oder Regelgüte erzielen.

Gemäß einer Weiterbildung des erfindungsgemäßen Verfahrens ist dieses entsprechend des erfindungsgemäßen Systems zum Ausgleichen einer durch thermische Belastung einhergehende Abmessungsänderung an der Stellarmatur, wie es in Bezug auf beispielhafte Ausführungen des Systems beschrieben wurde, oder entsprechend des Stellungsregelungssystems zum Regeln der Stellarmatur, wie es ebenfalls anhand beispielhafter Ausführungen beschrieben wurde, gekennzeichnet.

Gemäß eines weiteren Aspekts der vorliegenden Erfindung, der mit den vorherhergehenden Aspekten kombinierbar ist, ist eine Stellarmatur zum Einstellen einer Prozessfluidströmung einer prozesstechnischen Anlage, wie einer lebensmittelverarbeitenden Anlage, eines Kraftwerks oder dergleichen bereitgestellt. Die Stellarmatur kann ein Stellventil, einen das Stellventil insbesondere pneumatisch antreibenden Stellantrieb, eine den Stellantrieb mit dem Stellventil verbindende Kopplungsstruktur wie eine Stellstange und/oder Laterne insbesondere nach NAMUR, und eine Stellungsregelung zum Ansteuern des Stellantriebs umfassen. Die Stellungsregelung ist dabei derart ausgelegt, dass sie anhand eines Temperaturunterschieds zwischen einer Prozessfluid- oder Stellventiltemperatur und einer Stellantriebs- oder Umgebungstemperatur sowie anhand eines stellarmaturspezifischen, insbesondere kopplungsstrukturspezifischen, Ausdehnungskoeffizienten eine Stellwegkorrektur für den Stellantrieb bestimmt. Der Ausdehnungskoeffizient kann beispielsweise bei einer Initialisierung oder Kalibrierung der Stellarmatur oder vor Inbetriebnahme der Stellarmatur experimentell, insbesondere bei einer Stellarmatur-Typprüfung und/oder einer thermischen Prüfung, beispielsweise in einem Temperaturschrank, bestimmt werden. Eine derartige erfindungsgemä-ße Stellarmatur erzielt auf leicht umzusetzende Weise eine deutlich verbesserte Stell- und/oder Regelgüte.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, wobei

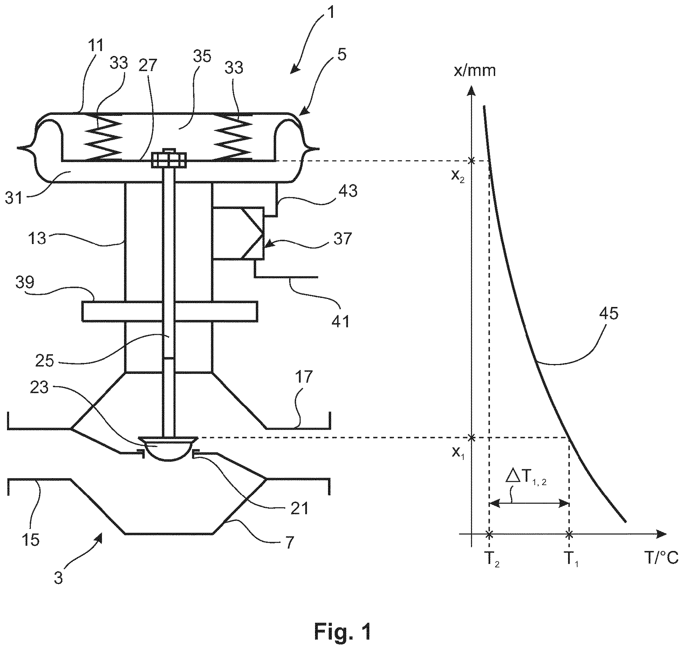

Fig. 1 eine Prinzipskizze einer erfindungsgemäßen Stellarmatur mit einem erfindungsgemäßen System zum Ausgleichen einer durch thermische Belastung einhergehende Abmessungsänderung, das zum Ausführen des erfindungsgemäßen Verfahrens zum Ausgleichen einer durch thermische Belastung einhergehende Abmessungsänderung an der Stellarmatur eingerichtet ist, zeigt.

In Fig. 1 ist eine erfindungsgemäße Stellarmatur mit einem erfindungsgemäßen System, das zum Ausführen des erfindungsgemäßen Verfahrens zum Ausgleichen einer durch thermische Belastung einhergehende Abmessungsänderung an der Stellarmatur eingerichtet ist, dargestellt. Die Stellarmatur ist in der beispielhaften Ausführung der Fig. 1 mit der Bezugsziffer 1 versehen. Die Stellarmatur 1 weist ein Stellventil 3 und beispielsweise einen pneumatischen Stellantrieb 5 auf. Ein Stellventilgehäuse 7 des Stellventils 3 ist mit einem Antriebsgehäuse 11 des Stellantriebs 5 über ein Joch 13 ortsfest getragen ist.

Das Stellventil 3 ist in ein Rohrsystem einer prozesstechnischen Anlage integriert, wobei der Rohransatz für die Strömungseingangsleitung mit der Bezugsziffer 15 versehen ist und eine Strömungsausgangsleitung mit der Bezugsziffer 17. Im Inneren des Stellventilgehäuses 7 ist ein Ventilsitz 21 ortsfest an der Innenseite des Stellventilgehäuses 7 befestigt. Der Ventilsitz 21 kooperiert mit einem Ventilglied 23 des Stellventils 3, das über eine Stellstange 25 von dem pneumatischen Stellantrieb 5 betätigt wird. Die Stellstange 25 erstreckt sich durch eine Öffnung im Oberteil des Stellventilgehäuses 7 längs des Jochs 13 in eine Durchführung im Stellantriebsgehäuse 11 und ist mit einer die beiden Arbeitskammern 31, 35 des pneumatischen Stellantriebs 5 trennenden Membran 27 fest verbunden.

Quer zu Erstreckungsrichtung der Stellstange 25 kann eine diese umgebende Scheibe 39 angeordnet sein. Die Scheibe 39 kann beispielsweise unmittelbar an einen Ventildeckel (nicht dargestellt) des Stellventils 3 anschließen. Die Scheibe 39 dient im wirklichen dazu, das Stellventil 3, bzw. den Ventildeckel, von der das Stellventil 3 mit dem Stellantrieb 5 verbindenden Kopplungsstruktur, beispielsweise dem Joch 13, zu trennen.

Der Stellantrieb 5 hat eine Arbeitskammer 31 und eine mit Druckfedern 33 belegte Rückstellkammer 35. Die pneumatische Arbeitskammer 31 ist pneumatisch mit einem Stellungsregler 37 verbunden, der an eine Druckluftquelle 41 von etwa 6 bar angeschlossen sein kann.

Ein Stellungsregler 37 ist im Bereich des Jochs 13 angeordnet und hat einen pneumatischen Ausgang, der über eine Ausgangsleitung 43 mit der pneumatischen Arbeitskammer 31 gekoppelt ist. Der Stellungsregler 37 kann auch einen Positions- oder Stellungssensor (nicht dargestellt) umfassen, der die Position des Ventilglieds 23 beispielsweise über einen Hebelarm (nicht dargestellt) erfasst. Der Hebelarm kann als Abtastarm ausgebildet sein, um zeitdiskrete Positionssignale zu generieren. Beispielsweise ist der Hebelarm drehbeweglich an der Stange 25 befestigt.

Im folgenden Beispiel wird die Funktionsweise des Systems beziehungsweise des Verfahrens zum Ausgleichen einer durch thermische Belastung einhergehende Abmessungsänderung an der beispielsweise als Stellventil 3 ausgebildeten Stellarmatur 1 veranschaulicht.

Neben der Prinzipskizze der erfindungsgemäßen Stellarmatur 1 ist ein schematisches Koordinatensystem abgebildet, wobei auf der Abszisse die Temperatur T in Grad Celsius und auf der Ordinate eine Stellarmaturposition X in Millimeter angetragen ist. Erfindungsgemäß kann an zwei Stellarmaturpositionen X1, X2, die beliebig entlang der Stellarmatur 1 gewählt werden können, ein jeweiliger Temperaturwert T1, T2 gemessen werden, wozu beispielsweise jeweils ein Temperatursensor (nicht dargestellt) an der Stellarmatur 1 angeordnet sein kann. In Fig. 1 wird beispielsweise ein erster Temperaturwert T1 an dem Ventilglied 25 gemessen, vorzugsweise an einer Ventilgliedposition, welche den Ventilsitz 21 in einer Schließstellung der Stellarmatur 1 berührt, um eine Prozesstemperatur, insbesondere die Prozessfluidtemperatur, zu bestimmen. Als zweiten Temperaturwert T2 wird gemäß Fig. 1 an einer zweiten Stellarmaturposition X2 die Temperatur beispielsweise mittels eines weiteren Temperatursensors (nicht dargestellt) an der Anbindung der Stellstange 25 an die Stellantriebmembran 27 gemessen, um eine Umgebungstemperatur, insbesondere eine Stellantriebstemperatur, zu bestimmen. Als Umgebungstemperatur ist dabei eine Temperatur zu verstehen, die größtenteils unbeeinflusst von der am Stellventil 3 herrschenden Temperatur, insbesondere der Prozessfluidtemperatur, ist. Die Umgebungstemperatur kann beispielsweise auch an einer von der Stellarmatur, insbesondere dem Stellantrieb, entfernten Position erfasst bzw. gemessen werden. Über die Wärmeübertragungseigenschaft der Atmosphäre, welche überwiegend auf der Übertragung von Energie durch benachbarte Moleküle der Umgebungsluft beruht, kann dann auf den an der Stellarmatur, beispielsweise des Stellantriebs, vorliegenden Temperaturwert rückgeschlossen werden. Je nach Einsatzort und Anwendungsgebiet der Stellarmatur 1 herrschen unterschiedliche Temperaturen insbesondere in Bezug auf die Prozesstemperatur, wie die Prozessfluidtemperatur, und die Umgebungstemperatur, wie die Stellantriebstemperatur. Bei Hochtemperaturanwendungen, also bei sehr hohen Prozessfluidtemperaturen und einem Einsatz der Stellarmatur bei etwa Raumtemperatur ist klar, dass die unterschiedlichen Stellarmaturkomponenten unterschiedlichen Temperaturen ausgesetzt sind und somit unterschiedliche Einflüsse hinsichtlich Wärmeausdehnung bzw. Längenänderung erfahren, insbesondere dass die stellventilnahen Komponenten deutlich höheren Temperaturen als die stellantriebnahen Komponenten ausgesetzt sind.

Erfindungsgemäß wird anhand des erfassten Temperaturunterschieds eine Stellwegkorrektur für den Stellantrieb 5 bestimmt, sodass die Stellarmaturstellung anhand der mittels des erfindungsgemäßen Systems bestimmten Stellwegkorrektur korrigiert werden kann. Somit ist es möglich, die aufgrund der thermischen Belastung einhergehende Abmessungsänderung der Stellarmatur 1 auszugleichen, um eine Abweichung der Stellarmatur-Ist-Stellung von der Stellarmatur-Soll-Stellung zu korrigieren. Dabei macht sich das erfindungsgemäße System bzw. die erfindungsgemäße Stellarmatur 1 den Zusammenhang zwischen Temperatur-Abmessungsänderung und stellarmaturspezifischen, insbesondere werkstoffabhängigen, Wärme-Ausdehnungskoeffizienten zunutze. Anhand der beiden erfassten, insbesondere gemessenen, Temperaturwerte T1 und T2 an den beiden Stellarmaturpositionen X1 und X2 kann eine beispielsweise wie in Fig. 1 abgebildete Temperaturkurve 45, wie ein Temperaturverlauf bzw. ein Temperaturgradient, gebildet werden. Dazu können beispielsweise in der Stellarmatur 1 integrierte Verarbeitungseinheiten (nicht dargestellt) mit hinterlegten Algorithmen zur Berechnung von Temperaturkurven 45 Anwendung finden oder es kann beispielsweise auf eine Datenbank mit hinterlegten Temperaturkurven 45 zurückgegriffen werden, aus welcher eine entsprechende Temperaturkurve 45 ausgewählt wird, die einer theoretisch aus den erfassten Temperaturen T1, T2 gebildeten Temperaturkurve am nächsten kommt. Hinsichtlich weiterer beispielhafter Ausführungen wird auf die vorliegende Beschreibung verwiesen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

Bezugszeichenliste

| 1 | Stellarmatur |
| 3 | Stellventil |
| 5 | Stellantrieb |
| 7 | Stellventilgehäuse |
| 11 | Antriebsgehäuse |
| 13 | Joch |
| 15 | Strömungseingangsleitung |
| 17 | Strömungsausgangsleitung |
| 21 | Ventilsitz |
| 23 | Ventilglied |
| 25 | Stellstange |
| 27 | Membran |
| 31, 35 | Arbeitskammer |
| 33 | Druckfeder |
| 37 | Stellungsregler |
| 39 | Scheibe |
| 41 | Druckluftquelle |
| 43 | Ausgangsleitung |
| 45 | Temperaturkurve |

**Patentansprüche**

1. System zum Ausgleichen einer durch thermische Belastung einhergehende Abmessungsänderung an einer Stellarmatur (1) zum Einstellen einer Prozessfluidströmung einer prozesstechnischen Anlage, wie einer chemischen Anlage, einer Lebensmittel verarbeitenden Anlage, eines Kraftwerks oder dergleichen, wobei die Stellarmatur (1) ein Stellventil (3) und einen das Stellventil (3) insbesondere pneumatisch antreibenden Stellantrieb (5) aufweist, wobei das System anhand eines Temperaturunterschieds zwischen einer Prozesstemperatur, wie der Prozessfluidtemperatur, und einer Umgebungstemperatur, wie eine Stellantriebstemperatur, eine Stellwegkorrektur für den Stellantrieb (5) bestimmt, **dadurch gekennzeichnet, dass** die Bestimmung der Stellwegkorrektur mittels eines stellarmaturspezifischen Ausdehnungskoeffizienten realisiert ist, der zumindest abschnittsweise zwischen dem Stellantrieb (5) und dem Stellventil (3) erfasst ist.

2. System nach Anspruch 1, das die Stellarmaturstellung anhand der Stellwegkorrektur korrigiert, wobei insbesondere die Stellwegkorrektur eine Abmessungsänderung an der Stellarmatur (1) vorzugsweise während des Betriebs derart ausgleicht, dass eine Abweichung einer Stellarmatur-Ist-Stellung von einer Stellarmatur-Soll-Stellung korrigiert ist.

3. System nach Anspruch 1 oder 2, bei dem der stellarmaturspezifische Ausdehnungskoeffizient zu einer den Stellantrieb (5) mit dem Stellventil (3) verbindenden Kopplungsstruktur, wie einer Stellstange und/oder Laterne insbesondere nach Namur, des Stellantriebs und/oder des Stellventils korrespondiert.

4. System nach Anspruch 3, bei dem das System eine Speichereinheit mit einer Datenbank für stellarmaturspezifische Ausdehnungskoeffizienten und/oder eine Verarbeitungseinheit aufweist, die dazu ausgelegt ist, bei einer Initialisierung oder Kalibrierung der Stellarmatur (1) oder vor Inbetriebnahme der Stellarmatur (1) experimentell, insbesondere bei einer Stellarmatur-Typprüfung und/oder einer thermischen Prüfung, beispielsweise in einem Temperaturschrank, den stellarmaturspezifischen Ausdehnungskoeffizienten zu bestimmen.

5. System nach einem der vorstehenden Ansprüche, umfassend eine Sensoreinrichtung zum Erfassen der Prozesstemperatur, wie der Prozessfluidtemperatur, und/oder einer Umgebungstemperatur, wie eine Stellantriebstemperatur, wobei insbesondere die Sensoreinrichtung einen Proximalsensor zum Ermitteln einer Prozesstemperatur im Bereich des Stellventils und/oder einen Distalsensor zum Ermitteln einer Umgebungstemperatur in einem vorbestimmten Abstand zum Stellventil (3) aufweist.

6. System nach einem der vorstehenden Ansprüche, umfassend eine Speichereinheit, auf der eine Datenbank mit Erfahrungswerten für Prozesstemperaturen, insbesondere Prozessfluidtemperaturen, und/oder Erfahrungswerten für Umgebungstemperaturen, vorzugsweise Stellantriebstemperaturen, die insbesondere von dem Einsatzort und/oder der Anwendung der Stellarmatur (1) abhängen, hinterlegt ist, wobei insbesondere das System eine Benutzerschnittstelle zum Eingeben von Prozesstemperaturen und/oder Umgebungstemperaturen aufweist.

**7.** System nach einem der Ansprüche 5 oder 6, bei dem die Sensoreinrichtung die Prozesstemperatur und/oder die Umgebungstemperatur vorzugsweise kontinuierlich beim Einnehmen der Stellarmatur (1) einer vorbestimmten Referenzstellung, vorzugsweise einer Schließ- und/oder vollständig geöffneten Stellung, erfasst.

**8.** System nach Anspruch 7, das anhand des/der in der Referenzstellung erfassten Temperaturwerts/Temperaturwerte die Stellwegkorrektur angleicht, vorzugsweise die Datenbank mit Stellwegkorrekturen aktualisiert.

**9.** System nach Anspruch 8, das den für die bestimmte Stellwegkorrektur maßgebenden Temperaturunterschied mit dem aktualisierten, in der Referenzstellung erfassten Temperaturunterschied vergleicht, vorzugsweise mit dem Temperaturunterschied zwischen

a) der mittels der Sensoreinrichtung erfassten Prozess- oder Umgebungstemperatur und der aus der Speichereinheit entnommenen Umgebungs- oder Prozesstemperatur, oder
b) der mittels der Sensoreinrichtung erfassten Prozess- und Umgebungstemperatur,

und die Stellwegkorrektur anhand der Abweichung der Temperaturunterschiede voneinander angleicht, vorzugsweise die Datenbank mit Stellwegkorrekturen aktualisiert.

**10.** Stellungsregelungssystem zum Regeln einer Stellarmatur (1) zum Einstellen einer Prozessfluidströmung einer prozesstechnischen Anlage, wie einer chemischen Anlage, einer Lebensmittel verarbeitenden Anlage, eines Kraftwerks oder dergleichen, wobei die Stellarmatur (1) ein Stellventil, einen das Stellventil (3) insbesondere pneumatisch antreibenden Stellantrieb (5) und eine Stellungsregelung zum Ansteuern des Stellantriebs aufweist, wobei das Stellungsregelungssystem anhand eines Temperaturunterschieds zwischen einer Prozesstemperatur, wie der Prozessfluidtemperatur, und einer Umgebungstemperatur, wie eine Stellantriebstemperatur, eine Stellwegkorrektur für den Stellantrieb (5) bestimmt und mittels der Stellwegkorrektur einen Stellungsregelungsbefehl der Stellungsregelung an den Stellantrieb (5) korrigiert, **gekennzeichnet durch** ein nach einem der Ansprüche 1 bis 9 ausgebildetes System.

**11.** Verfahren zum Ausgleichen einer durch thermische Belastung einhergehende Abmessungsänderung an einer Stellarmatur (1) zum Einstellen einer Prozessfluidströmung einer prozesstechnischen Anlage, wie einer chemischen Anlage, einer Lebensmittel verarbeitenden Anlage, eines Kraftwerks oder dergleichen, wobei die Stellarmatur (1) ein Stellventil, einen das Stellventil (3) insbesondere pneumatisch antreibenden Stellantrieb (5) und vorzugsweise eine Stellungsreglung zum Ansteuern des Stellantriebs aufweist, wobei eine Stellwegkorrektur für den Stellantrieb (5) anhand eines Temperaturunterschieds zwischen einer Prozesstemperatur, wie der Prozessfluidtemperatur, und einer Umgebungstemperatur, wie eine Stellantriebstemperatur, bestimmt wird, **dadurch gekennzeichnet, dass** die Stellwegkorrektur mittels eines stellarmaturspezifischen Ausdehnungskoeffizienten bestimmt wird, der zumindest abschnittsweise zwischen dem Stellantrieb (5) und dem Stellventil (3) erfasst wird.

**12.** Verfahren nach Anspruch 11, gekennzeichnet entsprechend des Systems nach einem der Ansprüche 1 bis 9 oder des Stellungsregelungssystems nach Anspruch 10.

**13.** Stellarmatur (1) zum Einstellen einer Prozessfluidströmung einer prozesstechnischen Anlage, wie einer chemischen Anlage, einer Lebensmittel verarbeitenden Anlage, eines Kraftwerks oder dergleichen, umfassend ein Stellventil (3), einen das Stellventil (3) insbesondere pneumatisch antreibenden Stellantrieb (5), eine den Stellantrieb (5) mit dem Stellventil (3) verbindende Kopplungsstruktur, wie eine Stellstange und/oder Laterne insbesondere nach Namur, und eine Stellungsreglung zum Ansteuern des Stellantriebs, wobei die Stellungsreglung anhand eines Temperaturunterschieds zwischen einer Prozessfluid- oder Stellventiltemperatur und einer Stellantriebstemperatur und eines stellarmaturspezifischen, insbesondere kopplungsstrukturspezifischen, vorzugsweise vorab erfassten, beispielsweise aus einer Datenbank ausgewählten, bei einer Initialisierung oder Kalibrierung der Stellarmatur (1) oder vor Inbetriebnahme der Stellarmatur (1) experimentell, insbesondere bei einer Stellarmatur-Typprüfung und/oder einer thermischen Prüfung, beispielsweise in einem Temperaturschrank bestimmten, Ausdehnungskoeffizienten eine Stellwegkorrektur für den Stellantrieb (5) bestimmt, **gekennzeichnet durch** ein mit der Stellungsreglung kommunizierendes, nach einem der Ansprüche 1 bis 9 ausgebildetes System.

**14.** Stellarmatur (1) nach Anspruch 13, umfassend ein mit der Stellungsreglung kommunizierendes, nach

Anspruch 10 ausgebildetes Stellungsregelungssystem.

15. Stellarmatur (1) nach Anspruch 13 oder 14, die zum Durchführen des Verfahrens nach einem der Ansprüche 11 bis 12 ausgebildet ist.

**Claims**

1. System for compensating a dimensional change, caused by thermal load on an actuator (1) for adjusting a process fluid flow of a process plant, such as a chemical plant, a food processing plant, a power plant or the like, wherein the actuator (1) comprises a control valve (3) and an actuator drive (5) driving the control valve (3) particularly pneumatically, wherein the system determines a displacement correction for the actuator drive (5) on the basis of a temperature difference between a process temperature, such as the process fluid temperature, and an ambient temperature, such as an actuator drive temperature, **characterized in that** the determination of the displacement correction is implemented by means of an actuator-specific expansion coefficient, which is detected at least sectionally between the actuator drive (5) and the control valve (3).

2. System according to claim 1, which corrects the actuator position by means of the displacement correction, wherein in particular the displacement correction compensates a dimensional change on the actuator (1) preferably during operation in such a way that a deviation of an actuator actual position from an actuator desired position is corrected.

3. System according to claim 1 or 2, in which the actuator-specific expansion coefficient corresponds to a coupling structure connecting the actuator drive (5) with the control valve (3), such as a control rod and/or yoke in particular according to Namur, of the actuator drive and/or the control valve.

4. System according to claim 3, in which the system comprises a storage unit with a database for actuator-specific expansion coefficients and/or a processing unit, that is designed to determine the actuator-specific expansion coefficient experimentally, in particular during an actuator type test and/or a thermal test, for example in a temperature cabinet, during an initialization or calibration of the actuator (1) or before commissioning of the actuator (1).

5. System according to one of the preceding claims, comprising a sensor device for detecting the process temperature, such as the process fluid temperature, and/or an ambient temperature, such as an actuator drive temperature, wherein in particular the sensor device comprises a proximal sensor for determining a process temperature in the region of the control valve and/or a distal sensor for determining an ambient temperature at a predetermined distance from the control valve (3).

6. System according to one of the preceding claims, comprising a storage unit on which a database is stored with empirical values for process temperatures, in particular process fluid temperatures, and/or empirical values for ambient temperatures, preferably actuator drive temperatures, which in particular depend on the site of operation and/or the application of the actuator (1), wherein in particular the system comprises a user interface for entering process temperatures and/or ambient temperatures.

7. System according to one of claims 5 or 6, in which the sensor device detects the process temperature and/or the ambient temperature preferably continuously when the actuator (1) is in a predetermined reference position, preferably a closed position and/or fully open position.

8. System according to claim 7, which adjusts the displacement correction based on the temperature value(s) detected in the reference position, preferably updates the data base with displacement corrections.

9. System according to claim 8, which compares the temperature difference decisive for the specific displacement correction with the updated temperature difference detected in the reference position, preferably with the temperature difference between

   a) the process temperature or ambient temperature detected by means of the sensor device and the ambient temperature or process temperature taken from the storage unit, or
   b) the process temperature and ambient temperature detected by means of the sensor device,

   and adjusts the displacement correction based on the deviation of the temperature differences from each other, preferably updates the data base with displacement corrections.

10. Position control system for controlling an actuator (1) for adjusting a process fluid flow of a process plant, such as a chemical plant, a food processing plant, a power plant or the like, wherein the actuator (1) comprises a control valve, an actuator drive (5) driving the control valve (3) particularly pneumatically and a position control for controlling the actuator drive, wherein the position control system determines a displacement correction for the actuator drive (5) based on a temperature difference between a process temperature, such as the process fluid temperature, and an ambient temperature, such as an actuator drive temperature, and corrects a position control command of the position control to the actuator drive (5) by means of the displacement correction, **characterized by** a system designed according to one of claims 1 to 9.

11. Method for compensating a dimensional change caused by a thermal load on an actuator (1) for adjusting a process fluid flow of a process plant, such as a chemical plant, a food processing plant, a power plant or the like, wherein the actuator (1) comprises a control valve, an actuator drive (5) driving the control valve (3) particularly pneumatically and preferably a position control for controlling the actuator drive, wherein a displacement correction for the actuator drive (5) is determined by means of a temperature difference between a process temperature, such as the process fluid temperature, and an ambient temperature, such as an actuator drive temperature, **characterized in that** the displacement correction is determined by means of an actuator-specific expansion coefficient, which is detected at least sectionally between the actuator drive (5) and the control calve (3).

12. Method according to claim 11, characterized according to the system according to one of claims 1 to 9 or the position control system according to claim 10.

13. Actuator (1) for adjusting a process fluid flow of a process plant, such as a chemical plant, a food processing plant, a power plant or the like, comprising a control valve (3), an actuator drive (5) driving the control valve (3) particularly pneumatically, a coupling structure connecting the actuator drive (5) with the control valve (3), such as a control rod and/or yoke in particular according to Namur, and a position control for controlling the actuator drive, wherein the position control determines a displacement correction for the actuator drive (5) based on a temperature difference between a process fluid temperature or control valve temperature and an actuator drive temperature and an actuator-specific, in particular coupling structure-specific, expansion coefficient, preferably detected experimentally in advance, for example selected from a database, determined during an initialization or calibration of the actuator (1) or before commissioning of the actuator (1), in particular during an actuator type test and/or a thermal test, for example in a temperature cabinet, **characterized by** a system designed according to one of claims 1 to 9 communicating with the position control.

14. Actuator (1) according to claim 13, comprising a position control system according to claim 10 communicating with the position control.

15. Actuator (1) according to claim 13 or 14, configured for performing the method according to one of claims 11 to 12.

**Revendications**

1. Système, destiné à compenser une variation dimensionnelle provoquée par des contraintes thermiques sur une vanne de réglage (1) pour régler la circulation d'un fluide de processus sur une installation technique de procédé, telle qu'une installation chimique, une installation de traitement de produits alimentaires, une centrale électrique, ou analogues, la vanne de réglage (1) comportant une soupape de commande (3) et un actionneur (5) entraînant, notamment par voie pneumatique la soupape de commande (3), le système déterminant une correction de la course de réglage pour l'actionneur (5), à l'aide d'une température différentielle entre une température de processus, telle que la température du fluide de processus et une température ambiante, telle qu'une température de l'actionneur, **caractérisé en ce que** la détermination de la correction de la course de réglage est réalisée au moyen d'un coefficient de dilatation spécifique à la vanne de réglage qui est détecté au moins par sections entre l'actionneur (5) et la soupape de commande (3).

2. Système selon la revendication 1, lequel corrige la position de la vanne de réglage à l'aide de la correction de la course de réglage, notamment la correction de la course de réglage compensant, de préférence en cours de fonctionnement une variation dimensionnelle sur la vanne de réglage (1) de sorte à corriger une divergence entre une position réelle de la vanne de réglage et une position de consigne de la vanne de réglage.

3. Système selon la revendication 1 ou 2, sur lequel le coefficient de dilatation spécifique à la vanne de réglage correspond à une structure d'accouplement, telle qu'une tige de réglage et / ou une lanterne, notamment selon Namur reliant l'actionneur (5) avec la soupape de commande (3) de l'actionneur et / ou de la soupape de commande.

4. Système selon la revendication 3, sur lequel le système comporte une unité de mémoire pourvue d'une base de données pour des coefficients de dilatation spécifiques à la vanne de réglage et / ou une unité de traitement qui est conçue pour déterminer le coefficient de dilation spécifique à la vanne de réglage de manière expérimentale, notamment lors d'un essai de type de la vanne de réglage et / ou d'un essai thermique, par exemple à l'aide d'une étuve lors d'une initialisation ou d'un étalonnage de la vanne de réglage (1) ou avant la mise en service de la vanne de réglage (1).

5. Système selon l'une quelconque des revendications précédentes, comprenant un dispositif de capteur, destiné à détecter la température de processus, telle que la température du fluide de processus et / ou une température ambiante, telle qu'une température de l'actionneur, notamment le dispositif de capteur comportant un capteur proximal, destiné à déterminer une température de processus dans la zone de la soupape de commande et / ou un capteur distal, destiné à déterminer une température ambiante à une distance prédéfinie par rapport à la soupape de commande (3).

6. Système selon l'une quelconque des revendications précédentes, comprenant une unité de mémoire, sur laquelle est sauvegardée une base de données avec des valeurs empiriques pour des températures de processus, notamment des températures de fluide de processus et / ou des valeurs empiriques pour des températures ambiantes, de préférence des températures de l'actionneur, qui dépendent notamment du lieu d'utilisation et / ou de l'utilisation de la vanne de réglage (1), notamment le système comportant une interface utilisateur, destinée à saisir des températures de processus et / ou des températures ambiantes.

7. Système selon l'une quelconque des revendications 5 ou 6, sur lequel le dispositif de capteur détecte de préférence en continu la température du processus et / ou la température ambiante lorsque la vanne de réglage (1) adopte une position de référence prédéfinie, de préférence une position fermée et / ou une position complètement ouverte.

8. Système selon la revendication 7, qui à l'aide de la valeur de température / des valeurs de température, adapte la correction de la course de réglage, de préférence met à jour la base de données avec des corrections de la course de réglage.

9. Système selon la revendication 8, qui pour la correction déterminée de la course de réglage compare la température différentielle déterminante avec la température différentielle mise à jour, détectée dans la position de référence, de préférence avec la température différentielle entre

a) la température de processus ou la température ambiante détectée au moyen du dispositif de capteur et la température ambiante ou la température de processus prélevée dans l'unité de mémoire, ou
b) la température de processus et la température ambiante détectée par le dispositif de capteur,

et adapte la correction de la course de réglage à l'aide de la divergence des températures différentielles entre elles, de préférence met à jour la base de données avec des corrections de la course de réglage.

10. Système de régulation de la position, destiné à réguler une vanne de réglage (1) pour régler la circulation d'un fluide de processus sur une installation technique de procédé, telle qu'une installation chimique, une installation de traitement de produits alimentaires, une centrale électrique, ou analogues, la vanne de réglage (1) comportant une soupape de commande et un actionneur (5) entraînant, notamment par voie pneumatique la soupape de commande (3) et une régulation de la position, destinée à activer l'actionneur, le système de régulation de la position déterminant une correction de la course de réglage pour l'actionneur (5) à l'aide d'une température différentielle entre une température de processus, telle que la température du fluide de processus et une température ambiante, telle qu'une température de l'actionneur et au moyen de la correction de la course de réglage, corrigeant une instruction de régulation de la position de la régulation de position sur l'actionneur (5), **caractérisé par** un système conçu selon l'une quelconque des revendications 1 à 9.

11. Procédé, destiné à compenser une variation dimensionnelle provoquée par des contraintes thermiques sur une vanne de réglage (1) pour régler la circulation d'un fluide de processus sur une installation technique de procédé, telle qu'une installation chimique, une installation de traitement de produits alimentaires, une centrale électrique, ou analogues, la vanne de réglage (1) comportant une soupape de commande et un actionneur (5) entraînant, notamment par voie pneumatique la soupape de commande (3) et de préférence une régulation de la position, destinée à activer l'actionneur, une correction de la course de réglage pour l'actionneur (5) étant déterminée à l'aide d'une température différentielle entre une température de processus, telle que la température du fluide de processus et une température ambiante, telle qu'une température de l'actionneur, **caractérisé en ce que** la correction de la course de réglage est déterminée au moyen d'un coefficient de dilatation spécifique à la vanne de réglage qui est détecté au moins par sections entre l'actionneur (5) et la soupape de commande (3).

12. Procédé selon la revendication 11, caractérisé en fonction du système selon l'une quelconque des revendications 1 à 9 ou du système de régulation de la position selon la revendication 10.

13. Vanne de réglage (1), destinée à régler une circulation d'une installation technique de processus, telle qu'une installation chimique, une installation de traitement de produits alimentaires, une centrale électrique ou analogues, comprenant une soupape de commande (3), un actionneur (5) entraînant la soupape de commande (3), notamment par voie pneumatique, une structure d'accouplement, telle qu'une tige de réglage et / ou une lanterne, notamment selon Namur reliant l'actionneur (5) avec la soupape de commande (3), et une régulation de la position, destinée à activer l'actionneur, la régulation de la position déterminant une correction de la course de réglage pour l'actionneur (5), à l'aide d'une température différentielle entre une température de fluide de processus ou une température de la vanne de réglage et une température de l'actionneur et un coefficient de dilatation spécifique à la vanne de réglage, notamment spécifique à la structure d'accouplement, de préférence détecté préalablement, par exemple sélectionné dans une base de données, déterminé de manière expérimentale, lors d'une initialisation ou d'un étalonnage de la vanne de réglage (1) ou avant la mise en service de la vanne de réglage (1), notamment lors d'un essai de type de la vanne de réglage et / ou d'un essai thermique, par exemple dans une étuve, **caractérisée par** un système communiquant avec la régulation de position, conçu selon l'une quelconque des revendications 1 à 9.

14. Vanne de réglage (1) selon la revendication 13, comprenant un système de régulation de la position communiquant avec la régulation de position, conçu selon la revendication 10.

15. Vanne de réglage (1) selon la revendication 13 ou 14, qui est conçue pour réaliser le procédé selon l'une quelconque des revendications 11 à 12.

**Fig. 1**

**IN DER BESCHREIBUNG AUFGEFÜHRTE DOKUMENTE**

**In der Beschreibung aufgeführte Patentdokumente**

- WO 2016126902 A
- EP 2466413 A2
- GB 2452043 A
- US 20140034145 A1